# EUROPÄISCHE PATENTSCHRIFT

(11) **EP 0 752 344 B1**
(45) Veröffentlichungstag und Bekanntmachung des Hinweises auf die Patenterteilung: **26.04.2000**
(21) Anmeldenummer: 96110454.4
(22) Anmeldetag: 28.06.1996
(51) Int. Cl.: B60R 21/13

(54) **Ausfahrbarer Überrollbügel**
Telescopic rollover bar
Arceau de sécurité télescopique

(30) Priorität: 04.07.1995 DE 19523790
(43) Veröffentlichungstag der Anmeldung: 08.01.1997
(73) Patentinhaber: ISE Innomotive Systems Europe GmbH, 51702 Bergneustadt (DE)
(72) Erfinder: Reuber, Gerhard, 57489 Drolshagen (DE); Löwen, Jakob, 51702 Bergenustadt (DE)
(74) Vertreter: Fuchs Mehler Weiss & Fritzsche

(56) Entgegenhaltungen:
- DE-A- 4 302 152
- DE-A- 4 314 538
- DE-C- 4 100 506
- US-A- 3 292 726

## Beschreibung

Die vorliegende Erfindung geht aus von einem ausfahrbaren Überrollbügel gemäß dem Oberbegriff des Anspruchs 1. Ein derartiger Überrollbügel ist aus der DE 43 14 538 A1 bekannt. Der bekannte Überrollbügel ist relativ günstig herzustellen, da sowohl seine beiden Bügelschenkel als auch zwei der Innen- bzw. der Außenführung der Bügelschenkel dienende Führungskörper aus Strangpreßprofilen gefertigt sind. Strangpreßprofile haben den Vorteil einer geringen Masse und einer preiswerten Herstellung. Bei Überrollbügeln kommt es aber in besonderem Maße auf eine hohe Materialsteifigkeit an, damit im Crashfall Kopfverletzungen der Fahrzeuginsassen verhindert werden. Strangpreßprofile sind jedoch naturgemäß durch das verwendete relativ weiche Material aus Aluminium oder Aluminiumlegierungen entsprechend leicht verformbar.

Die Aufgabe der vorliegenden Erfindung besteht darin, die Steifigkeit eines Überrollbügels der eingangs genannten Art mit preiswerten Mitteln ohne Funktionseinbußen zu erhöhen.

Diese Aufgabe wird gelöst in Verbindung mit den kennzeichnenden Merkmalen des Anspruchs 1. Das Prinzip der Erfindung besteht darin, die Möglichkeit einer Relativewegung der Bügelschenkel zueinander einzuschränken. Dieses Prinzip ist dabei nicht auf nach dem Strangpreßverfahren hergestellte Bügelschenkel beschränkt, ist bei solchen aber besonders vorteilhaft, da sich auf diese Weise Bügelschenkel und Verbindungswand in einem Stück herstellen lassen. Sollte sich erweisen, daß auch andere profilgebende Verfahren, z.B. Kaltziehen für eine derartige einstückige Fertigung geeignet sind, so ist die Erfindung hierfür in gleichem Maße vorteilhaft.

Weitere vorteilhafte Ausgestaltungen der Erfindung finden sich in den abhängigen Ansprüchen.

Eine nähere Erläuterung des Erfindungsgedankens erfolgt nun anhand der Beschreibung eines bevorzugten Ausführungsbeipiels in sechs Figuren mit folgenden Darstellungen:
- Fig. 1: zeigt inen erfindungsgemäßen Überrollbügel mit einem Teil einer Sitzlehne in Seitenansicht,
- Fig. 2: einen Längsschnitt durch einen Überrollbügel nach Fig. 1,
- Fig. 3: einen Überrollbügel nach Fig.1 von vorne im Teilschnitt,
- Fig. 4: einen Detailausschnitt aus Fig. 2 mit einer Auslöse- und Verriegelungsanordnung,
- Fig. 5a und 5b: Detailausschnitte aus den Fig. 2 und 3 zur Befestigung einer Abdeckung am Überrollbügel
- und Fig. 6: einen Querschnitt durch den erfindungsgemäßen Überrollbügel.

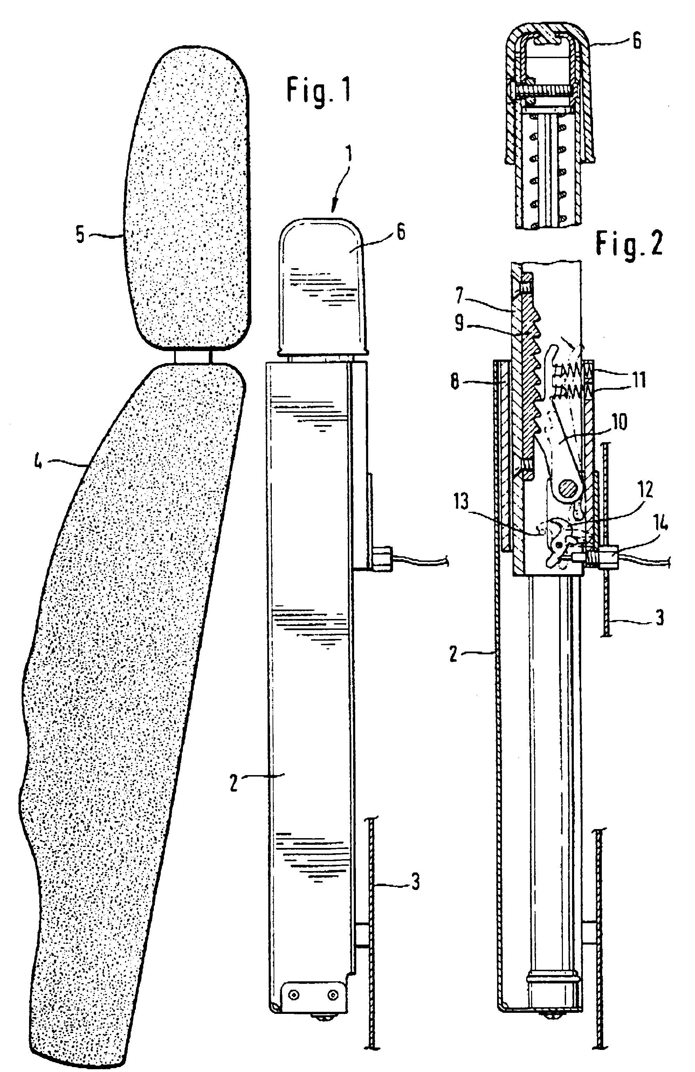

Die Anordnung des Überrollbügels 1 im Fahrzeug geht aus Fig. 1 hervor. Der Überrollbügel 1 ist mit einer Blechkassette 2, die sein Außengehäuses bildet an der Hinterwand 3 des Fahrgastraumes eine Cabriolets befestigt. Er befindet sich unmittelbar hinter der Rückenlehne 4 eines hinteren Fahrzeugsitzes. Die Blechkassette 2 schließt nach oben etwa bündig mit der Rückenlehne 4 ab. In Höhe der zugehörigen Kopfstütze 5 besitzt der Überrollbügel 1 eine Bügelabdeckung 6 aus Kunststoff, welche mit mit dem Überrollbügel zusammen nach oben ausgefahren wird, wenn ein Crashfall vorliegt. In ausgefahrener Stellung befindet sich dann die Bügelabdeckung 6 oberhalb der Kopfstütze 5.

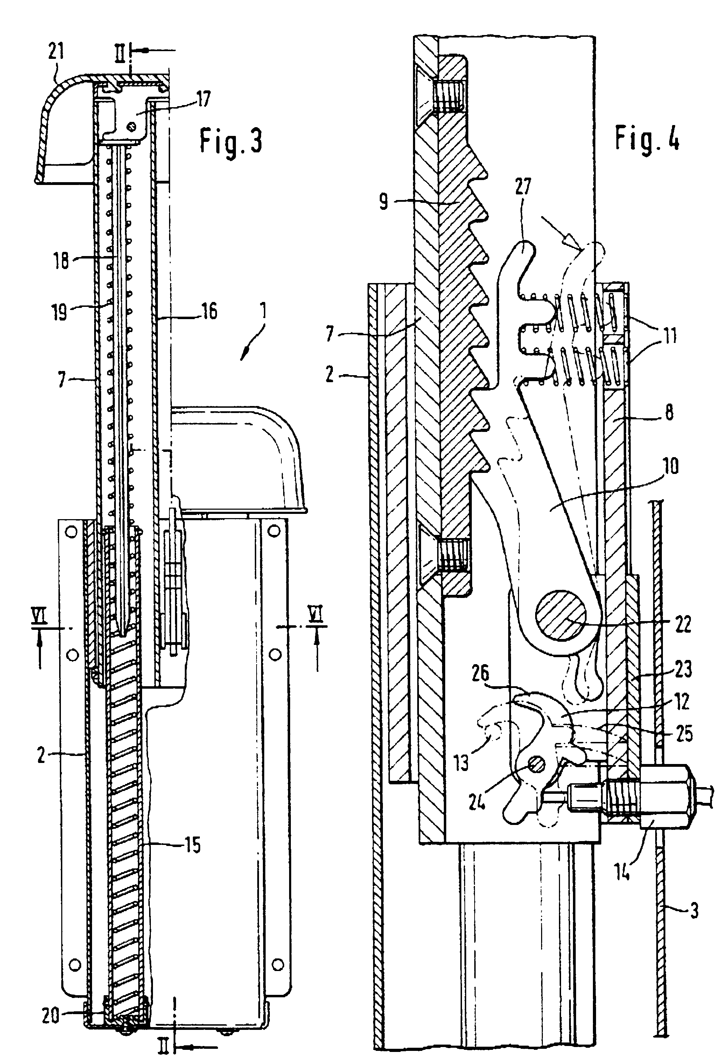

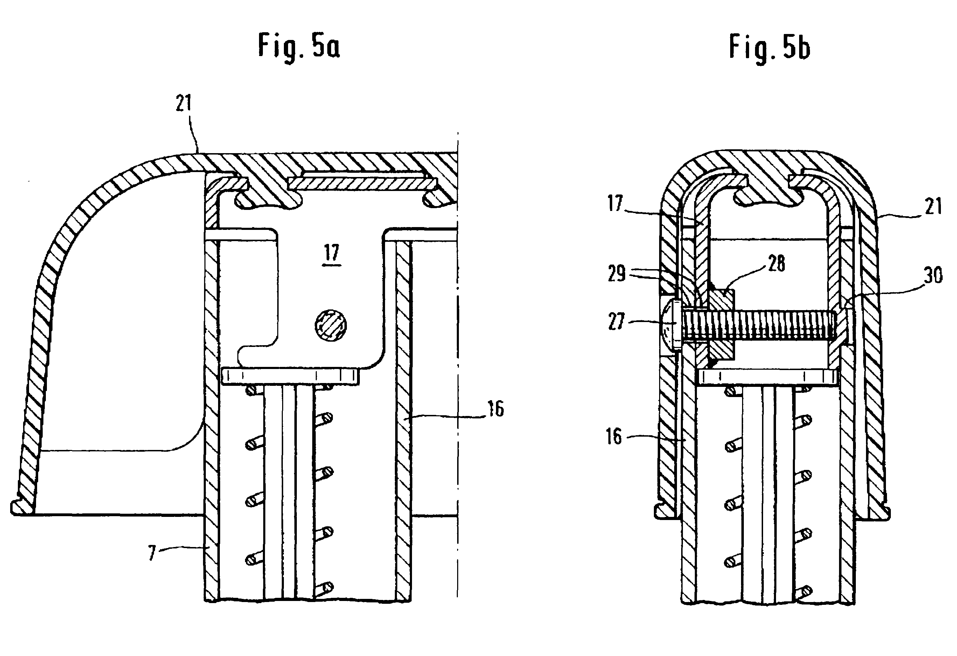

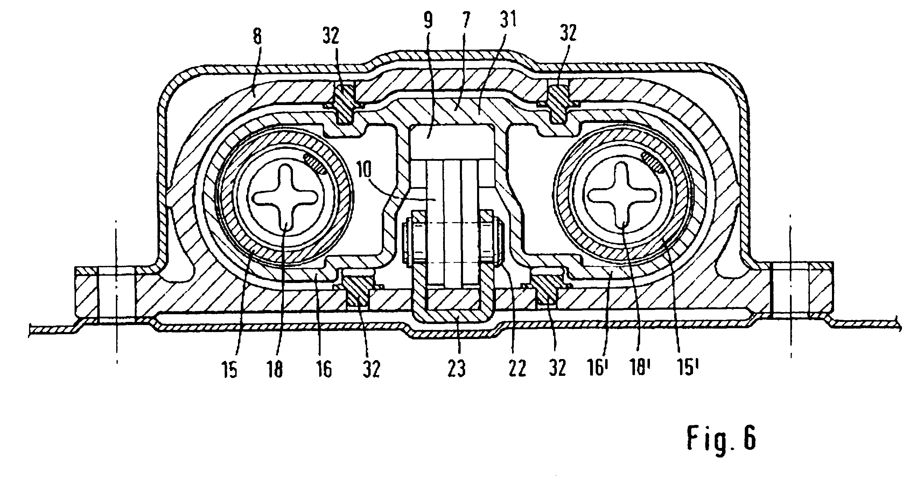

Die Anordnung der Funktionselemente des Überrollbügels 1 geht aus Fig. 2 hervor. Aus Platzgründen ist nicht die volle Länge dargestellt. Im oberen Teil der Abbildung ist die Schnittebene gegenüber dem unteren Teil der Abbildung versetzt, wie aus dem Schnitt II-II in Fig. 3 hervorgeht. In der Blechkassette 2 ist zur äußeren Führung des eigentlichen Bügelkörpers 7 ein Führungsblock 8 befestigt, welcher sich im oberen Bereich der Blechkassette 2 über einen Teil ihrer Höhe erstreckt. Die genaue Anordnung der gegeneinander verschiebbaren Teile wird später anhand von Fig. 6 näher erläutert. Mit dem Bügelkörper 7 ist ein Zahnsegment 9 vernietet, welches mit einer Rastklinke 10 zusammenwirkt. Diese Rastklinke 10 ist am Führungsblock 8 schwenkbar befestigt. Sie wird von zwei Druckfedern, den Klinkenfedern 11 zum Zahnsegment 9 hin derart beaufschlagt, daß ihre Zähne in der Grundstellung mit den Zahnsegment 9 in Eingriff stehen. Durch die Formgebung der Zähne ist ein Ausfahren des Bügelkörpers 7 nach oben jederzeit möglich, nach unten jedoch in der Grundstellung der Rastklinke 10 gesperrt. Zusammen mit der Rastklinke 10 ist am Führungsblock 8 noch eine Entriegelungsklinke 12 schwenkbar befestigt. Sie steht im Normalfall mit einem Stift 13 im Eingriff, welcher am Bügelkörper 7 in einer Höhe befestigt ist, die den Überrollbügel in verriegelter Stellung in einer Position gemäß Fig. 1 hält. Die Entriegelungsklinke 12 ist über ein Kraftelement 14 betätigbar, welches die Entriegelungsklinke 12 vom Stift 13 wegschwenkt. Das Kraftelement 14 ist hier als pyrotechnisch betätigte, stiftausstoßende Patrone dargestellt. Es kann sich hierbei jedoch auch um einen Elektromagneten handeln. Bei Verwendung einer pyrotechnisch betätigten Patrone empfiehlt sich eine Anordnung gemäß Fig. 2 in welcher diese stiftausstoßende Patrone durch die Hinterwand 3 des Fahrgastraumes hindurch ragt, damit nach einer Betätigung der Entriegelungsklinke 12 eine solche Patrone ausgewechselt werden kann. Ein Detailausschnitt zu dieser Ver- und Entriegelungsanordnung findet sich in Fig. 4. Der obere Teil von Fig. 2 zeigt einen Schnitt durch den Bügelkörper durch die Mitte eines der angeformten Standrohre. Dieses Detail ist noch einmal vergrößert in Fig. 5b dargestellt.

Fig. 3 zeigt in der linken Hälfte einen Überrollbügel mit ausgefahrenen Bügelkörper 7 und in der rechten Hälfte mit eingefahrenem Bügelkörper. Dabei ist ein Teilschnitt durch die linke Hälfte des Überrollbügels 1 gezeigt. Der Bügelörper 7 ist bezüglich der Mittelebene spiegelsymmetrisch aufgebaut. Die Beschreibung der linken Bildhälfte gilt somit gleichfalls für die rechte Bildhälfte. Am Boden der Blechassette 2 sind Standrohre befestigt, von denen hier nur das linke Standrohr 15 sichtbar ist. Jedes Standrohr ragt in jeweils einen Bügelschenkel 16 und ist in diesem etwa über dreiviertel des Umfangs seiner Mantelfläche eng geführt. Lediglich auf den zueinanderweisenden Seiten der Bügelchenkel, hier des Bügelschenkels 16, weisen diese ein radiales Spiel zum jeweiligen Standrohr, hier 15, auf. Am oberen Ende des Bügelschenkels 16 ist eine Verstärkung 17 dargestellt, die sich über die volle Breite des Bügelkörpers 7 erstreckt und aus Blech gefertigt ist. An dieser stützt sich ein Federführungsbolzen 18 ab, welcher auch bei ausgefahrenem Bügelkörper 7 noch bis in das Standrohr hineinragt. Der Federführungsbolzen 18 besitzt ein kreuzförmiges Profil und durchdringt eine spiralförmige Crashfeder 19, welche das Standrohr 15 durchläuft und sich an dessen Boden abstützt. Im eingefahrenen Zustand des Bügelkörpers bildet diese Crashfeder zusammen mit ihrem Pendant auf der anderen Seite einen Energiespeicher für die Ausfahrbewegung im Crashfall. Das Standrohr 15 ist am Boden der Blechkassette 2 mit einem topfartigen Bodenstück 20 angeschraubt.

An seinem oberen Ende weist der Überrollbügel 1 noch eine Abdeckung 21 auf, welche an der Verstärkung 17 angebracht wird, bevor die Verstärkung 17 am Bügelkörper 7 befestigt wird. Vor der Anbringung der Abdeckung 21 an der Verstärkung 17 weist die Abdeckung 21 Zapfen auf, die in entsprechende Löcher der Verstärkung 17 eingeführt werden und sodann mit einem heißen Gegenstand eingedrückt und verschmolzen werden, so daß sich eine formschlüssige Verbindung ergibt. Sodann wird die Verstärkung 17 auf beiden Seiten des Überrollbügels mit jeweils zwei Schenkelblechen in die Bügelschenkel eingeführt und über eine Schraube mit ihren Schenkelblechen jeweils an die Außenwand der Bügelschenkel gedrückt. Eine genauere Beschreibung dieser Befestigungsart erfolgt später anhand von Fig. 5a und Fig. 5b.

Der Ausschnitt, welcher in Fig. 4 dargestellt ist, zeigt den verwendeten Mechanismus zur Ver- und Entriegelung des Überrollbügels.

Die Rastklinke 10 ist mit einem Lagerbolzen 22 an einem Rastengehäuse 23 schwenkbar befestigt. Das Rastengehäuse 23 besteht aus einer Blechklammer aus Stahlblech welche von der rechts dargestellten Rückseite des Führungsblocks in dafür angebrachte Löcher eingeschoben ist. Die genaue Anordnung des Rastengehäuse 23 ergibt sich aus Fig. 6. Das RastenGehäuse 23 trägt ebenfalls einen Gelenkbolzen 24 für die Entriegelungsklinke 12.

wie schon beschrieben, wird hier als Kraftelement 14 eine stiftausstoßende, pyrotechnisch betätigte Patrone verwendet. Damit diese nach einem Crashfall auswechselbar ist, ist sie von außen in die Blechkassette 2 von der rechts dargestellten Rückseite eingeführt und in den Führungsblock 2 eingeschraubt. Für den Fall, daß an Stelle einer pyrotechnischen Patrone ein Crashmagnet verwendet wird, so ist es nicht unbedingt erforderlich, daß er von außen her auswechselbar ist, da er immer wieder betätigt werden kann. Mit dicken Linien ist in Fig. 4 die Stellung der Funktionselemente in einem Crashfall dargestellt. Die gestrichelte Position der Entriegelungsklinke 12 stellt die Normalstellung dar, wobei der angedeutete Stift 13 am Bügelkörper im oberen Bereich angebracht ist. Dieser Stift 13 kann auch dann, wenn der Überrollbügel nicht vollständig ausgefahren ist, mit der Rastklinke 10 zusammenwirken und ein weiteres Einfahren des Bügelkörpers 7 verhindern.

Ein Ausfahren erfolgt durch Betätigen des Kraftelementes 14, welches die Entriegelungsklinke 12 durch eine Schwenkbewegung vom Stift 13 abhebt. Der Stift 13 kann durch die entsprechende Formgebung der Zähne der Rastklinke 10 an dieser entlang ratschen, so daß sich der Überrollbügel in seine ausgefahrene Position begibt. Im ausgefahrenen Zustand des Bügelkörpers 7 befindet sich das Zahnsegment 9 gerade in der Höhe der Zähne der Rastklinke 10. Auch schon für den Fall, daß der Bügelkörper 7 unter Druckbelastung steht, bevor er seine endgültig ausgefahrene Position erreicht hat, läßt sich die Rastklinke 10 - in diesem Fall im oberen Bereich des Zahnsegmentes 9 - mit entsprechenden Zähnen des Zahnsegmentes 9 in Eingriff bringen. Hierzu dienen die Klinkenfedern 11, welche die Rastklinke 10 zum Zahnsegment 9 hin beaufschlagen. Die Klinkenfedern 11 sind durch Löcher der Rückwand des Führungsblocks 8 geführt und an der Rückwand der Blechkassette 2 befestigt. Dadurch, daß sowohl beim Zahnsegment 9 als auch bei der Rastklinke 10 die Zähne bei einer Aufwärtsbewegung des Bügelkörpers 7 nur mit abgeschrägten Flanken aneinander entlang gleiten, ist eine Ausfahrbewegung des Bügelkörpers 7 jederzeit möglich. Bei einer Kraft von oben treffen dann senkrechte Flanken der Zähne aufeinander, so daß zwischen Rastklinke 10 und Zahnsegmente 9 Formschluß besteht. Bei einer solchen Krafteinwirkung auf den Bügelkörper 7 wird dieser Formschluß verstärkt.

Auch die Entriegelungsklinke 12 weist eine Druckfeder 25 auf, welche sie zur Verriegelungsstellung hin beaufschlagt. Dies ist für eine Rückstellung des Überrollbügels nach einem Crashfall von Bedeutung, damit die Entriegelungsklinke 12 automatisch ihre Verriegelungsstellung einnimmt. Hierzu hat die Entriegelungsklinke einen Haken 26, welcher nach oben hin abgerundet ist. Das ermöglicht bei einer Abwärtsbewegung des Bügelkörpers 7, daß der Stift 13 den Haken 26 leicht nach rechts verschiebt, um dann mit dem Haken 26 einzurasten. Ebenfalls der Rückstellung des Bügelkörpers 7 dient eine kleiner an der Rastklinke 10 angeformter Rasthebel 27. Dieser ragt etwas über den oberen Rand der Blechkassette 2 hinaus, so daß er manuell bedient werden kann. Hierdurch wird ermöglicht, die Rastklinke 10 manuell außer Eingriff mit dem Zahnsegment 9 zu bringen und den Bügelkörper 7 wieder in seine eingefahrene Position zu schieben.

Die Figuren 5a und 5b zeigen die Befestigung der Bügelabdeckung 21 am Bügelkörper 7. Fig. 5a ist nach rechts hin spiegelsymmetrisch zu ergänzen. Wie hier in den Bügelschenkel 16 so ist auch entsprechend auf der anderen Seite die Verstärkung 17 in den Hohlraum des Bügelschenkels eingeführt und, wie aus Fig. 5b ersichtlich, mit einer Schraube 27 befestigt. Hierzu ist an der Innenwand des U-förmig gebogenen Blechteils, welches die Verstärkung 17 bildet, eine Mutter 28 angeschweißt, deren Innengewinde die Fortsetzung eines kreisförmigen Loches 29 im Bügelschenkel 16 und in der Verstärkung 17 bildet. Auf der gegenüberliegenden Seite besitzt zwar der Bügelschenkel 16 ein entsprechende Loch, nicht aber die Verstärkung 17.

Vor der Montage der Verstärkung 17 ist die Bügelabdeckung 21 aus Kunststoff mit einstückigen Fortsätzen in entsprechende Löcher der Verstärkung 17 von oben eingeknöpft worden und sodann formschlüssig verschmolzen worden. Damit die Schraube 27 zur Befestigung durch das Loch 29 eingeführt werden kann, besitzt auch die Bügelabdeckung 21 ein mit dem Loch 29 koaxiales Loch, welches jedoch einen größeren Durchmesser aufweist, so daß der Kopf der Schraube 27 versenkt werden kann. Die Schraube 27 wird also durch das Loch 29 eingeführt und durch die Mutter 28 in das Innere der Verstärkung 17 eingeschraubt. Die Länge der Schraube 27 ist so bemessen, daß sie beim Einschrauben an der gegenüberliegenden Seite die Wand der Verstärkung 17 in das gegenüberliegende Loch 30 des Bügelschenkels 16 eindrückt. Durch diese Art der Verschraubung werden die Seitenwände der Verstärkung 17 gegen die Wände des Bügelschenkels 16 gedrückt, wobei durch das Eindrücken der Wand der Verstärkung 17 in das Loch 30 sowie durch den Schaft der Schraube 27 ein Formschluß hergestellt ist.

Fig. 6 entspricht einem Schnitt entlang der Linie VI-VI, die in Fig. 3 eingezeichnet ist. Aus dieser Figur geht die räumliche Ineinanderschachtelung der einzelnen Elemente des Überrollbügels hervor. Der Bügelkörper 7 besitzt als Strangpreßprofil eine annähernd brillenartige Form. Dabei ist zwischen den Bügelschenkeln 16 und 16' eine Verbindungswand angeordnet. Diese ist gegenüber der Verbindungslinie der beiden Federführungsbolzen 18 und 18' parallel versetzt, so daß zwischen den Bügelschenkeln 16 und 16' das Zahnsegment 9 und die Rastklinke 10 Platz finden. Ebenfalls zwischen den Bügelschenkeln 16,16' ist die hier nicht sichtbare Entriegelungsklinke 12 angeordnet. Die einander zugewandten Bereiche der Bügelschenkel 16 und 16' sind im Profil der Kontur der Rastklinke 10 angepaßt und daher von den Standrohren 15 und 15' abgehoben. Da die Standrohre 15 und 15' aber über die Hälfte ihres Umfangs eng von den Bügelschenkeln 16 und 16' umgeben sind und sich das Profil der Bügelschenkel im Bereich der Führungselemente 32 verengt, ist nur eine rein axiale Relativbewegung zwischen Standrohren 15 und 15' und Bügelschenkeln 16 und 16' möglich.

Der Bügelkörper 7 ist von einem ebenfalls im Strangpreßverfahren hergestellten Führungsblock 8 umgeben, welcher sich, wie schon zu Fig. 2 erwähnt, nur über einen Teilbereich der axialen Länge des Bügelkörpers 7 erstreckt. Der Führungsblock 8 ist mit Ausnehmung versehen in welche die gleitfähigen Führungselemente 32 eingesteckt sind. Diese Führungselemente 32 bestehen aus einem für solche Zwecke üblichen Werkstoff, wie beispielsweise PTFE.

Der Schnitt nach Fig. 6 verdeutlicht die Art der Befestigung der Rastklinke 10 am Führungsblock 7. Von der Rückwand, also von der Seite der Fahrzeughinterwand her, ist in entsprechende Ausnehmungen des Führungsblocks 8 das Rastengehäuse 23 eingeschoben, welches mit runden, gegenüberliegenden Löchern für den Lagerbolzen 22 sowie für den Gelenkbolzen 24 der Entriegelungsklinke 12 versehen ist. Nach Einführung des Rastengehäuses 23 in den Führungsblock 8 werden die Rastklinke 10 und die Entriegelungsklinke 12 mit ihren entsprechenden Bolzen befestigt. Auf der Innenseite der Verbindungswand 31 des Bügelkörpers 7 ist zwischen den Bügelschenkeln 16 und 16' das Zahnsegment 9 angenietet, welches mit der Rastklinke 10 zusammenwirkt.

Der beschriebene Überrollbügel ist dazu bestimmt, nur im Crashfall auszufahren. Es ist jedoch auch möglich, durch bekannte Maßnahmen mittels eines Elektromotors oder ähnlichem einen zusätzlichen Komfortantrieb einzurichten.

## Patentansprüche

1. Ausfahrbarer Überrollbügel (1) für Cabriolet mit zwei parallel verlaufenden Bügelschenkeln (16,16') und einer Verriegelungs- und Auslösevorrichtung (10,9;12,13), dadurch **gekennzeichnet,** daß die Bügelschenkel (16,.16') durch eine Verbindungsplatte (31) über den größten Teil ihrer Länge miteinander verbunden sind.

2. Überrollbügel nach Anspruch 1, dadurch **gekennzeichnet,** daß die Bügelschenkel (16,16') und die Verbindungsplatte (31) einstückig hergestellt sind und einen Bügelkörper (7) bilden.

3. Überrollbügel nach Anspruch 2, dadurch **gekennzeichnet,** daß die einstückige Herstellung durch ein profilgebendes Verfahren erfolgt ist.

4. Überrollbügel nach einem der vorhergehenden Ansprüche, dadurch **gekennzeichnet,** daß der Bügelkörper (7) von einer ortsfesten, einstückigen Außenführungsvorrichtung (8) über einen Teil seiner Länge umgeben ist.

5. Überrollbügel nach einem der vorhergehenden Ansprüche, dadurch **gekennzeichnet,** daß die Bügelschenkel (16,16') und die Verbindungsplatte (31) zusammen ein etwa brillenförmiges Profil ergeben, wobei die Verbindungsplatte (31) gegenüber der Ebene der Mittelachsen der Bügelschenkel (16,16') parallel versetzt ist.

6. Überrollbügel nach einem der vorhergehenden Ansprüche, dadurch **gekennzeichnet,** daß jeder Bügelschenkel (16,16') ein ortsfestes Standrohr (15,15') als Innenführung aufweist.

7. Überrollbügel nach Anspruch 6, dadurch **gekennzeichnet,** daß die einander zugewandten Bereiche der Bügelschenkel (16,16') Spiel zu den Standrohren (15,15') aufweisen und in ihrem Profil der äußeren Abmessungen der Verriegelung- und Auslösevorrichtung angepaßt sind, welche zwischen den Bügelschenkeln angeordnet ist.

## Claims

1. An extensible roll bar (1) for a cabriolet, comprising two bar limbs (16, 16') extending in parallel and a locking and release device (10, 9; 12, 13), **characterised** in that the bar limbs (16, 16') are connected to each other over the majority of their length by a connecting plate (31).

2. A roll bar according to claim 1, **characterised** in that the bar limbs (16, 16') and the connecting plate (31) are manufactured in one piece and form a bar body (7).

3. A roll bar according to claim 2, **characterised** in that the manufacture in one piece has been carried out by a section-producing process.

4. A roll bar according to any one of the preceding claims, **characterised** in that the bar body (7) is surrounded over part of its length by a stationary one-piece external guide device (8).

5. A roll bar according to any one of the preceding claims, **characterised** in that the bar limbs (16, 16') and the connecting plate (31) together produce an approximately spectacle-shaped section, the connecting plate (31) being offset parallel to the plane of the central axes of the bar limbs (16, 16').

6. A roll bar according to any one of the preceding claims, **characterised** in that each bar limb (16, 16') has a stationary upright pipe (15, 15') as an internal guide.

7. A roll bar according to claim 6, **characterised** in that the regions of the bar limbs (16, 16') that face each other have clearance from the upright pipes (15, 15') and are adapted in their section to the external dimensions of the locking and release device which is arranged between the bar limbs.

## Revendications

1. Arceau de sécurité déployable (1) pour cabriolet, comprenant deux branches d'arceau (16, 16') qui s'étendent parallèlement et un dispositif de verrouillage et de déverrouillage (10, 9 ; 12, 13), caractérisé en ce que les branches (16, 16') de l'arceau sont reliées entre elles par une plaque de liaison (31) sur la plus grande partie de leur longueur.

2. Arceau de sécurité selon la revendication 1, caractérisé en ce que les branches (16, 16') de l'arceau et la plaque de liaison (31) sont fabriquées en une seule pièce et forment un corps d'arceau (7).

3. Arceau de sécurité selon la revendication 2, caractérisé en ce que la fabrication en une seule pièce est réalisée par un procédé de profilage.

4. Arceau de sécurité selon une des revendications précédentes, caractérisé en ce que le corps d'arceau (7) est entouré sur une partie de sa longueur par un dispositif de guidage extérieur (8) fixe et en une seule pièce.

5. Arceau de sécurité selon une des revendications précédentes, caractérisé en ce que les branches (16, 16') de l'arceau et la plaque de liaison (31) forment ensemble un profil en forme de lunettes, la plaque de liaison (31) étant décalée parallèlement par rapport au plan des axes médians des branches (16, 16') de l'arceau.

6. Arceau de sécurité selon une des revendications précédentes, caractérisé en ce que chaque branche (16, 16') de l'arceau présente un tube montant fixe (15, 15') en qualité de guidage intérieur.

7. Arceau de sécurité selon la revendication 6, caractérisé en ce que les régions des branches (16, 16') de l'arceau qui sont dirigées l'une vers l'autre présentent du jeu par rapport aux tubes montants (15, 15') et sont adaptées par leur profil aux dimensions extérieures du dispositif de verrouillage et de déverrouillage, lequel est disposé entre les branches de l'arceau.
